# EUROPEAN PATENT APPLICATION

(11) **EP 4 489 204 A1**
(43) Date of publication of application: **08.01.2025**
(21) Application number: 23759911.3
(22) Date of filing: 20.02.2023
(51) Int. Cl.: H01M 50/367, H01G 11/10, H01G 11/78, H01M 50/209, H01M 50/213, H01M 50/342, H01M 50/35

(54) **ELECTRIC POWER STORAGE MODULE**

(30) Priority: 28.02.2022 JP 2022029789
(71) Applicant: Panasonic Intellectual Property Management Co., Ltd., Kadoma-shi, Osaka 571-0057 (JP)
(72) Inventor: SAWADA, Koichi, Kadoma-shi, Osaka 571-0057 (JP)
(74) Representative: Novagraaf International SA
(86) International application number: PCT/JP2023/005911
(87) International publication number: WO 2023/162910

(57) **Abstract**

A power storage module includes a holder that includes a plurality of housing parts housing a plurality of power storage devices, each with an exhaust valve, and a plurality of through holes connecting the plurality of housing parts and an outside; and a duct cover covering an end face of the holder where the exhaust valves of the plurality of power storage devices are exposed through the plurality of through holes and forming a gas flow passage (exhaust space) with the end face. The duct cover includes a plurality of protrusions discretely protruding toward the end face. The plurality of protrusions include respective leading ends facing a remaining part of the end face where the plurality of through holes are absent.

## Description

### TECHNICAL FIELD

The present disclosure relates to a power storage module.

### BACKGROUND ART

For power storage devices such as lithium-ion cells, various factors, including overcharging and overcurrent, can contribute to gas generation inside the power storage device and an increase in internal pressure. A power storage device is prepared for such a situation by including an exhaust valve. When the internal pressure of the power storage device increases, the exhaust valve opens and releases gas, thus preventing the internal pressure of the power storage device from rising above a predetermined level.

Since voltage and cell capacity of the single power storage device are relatively low, plural battery cells are used to obtain a specified capacity and a specified output voltage by being connected in parallel and series. In that case, the specified number of power storage devices are often housed in a case to form a power storage module. The power storage module can have, inside the case, a passage for the gas released from each of the power storage devices. This passage for exhaust gas flow inside the case may be blocked, particularly when there is an external impact.

A battery pack described in PTL 1 uses plural secondary cells, which are exemplary power storage devices, and includes an exhaust duct and an exhaust port for emitting the gas released from the plural power storage devices, with a noise reduction part provided at the exhaust port.

### CITATION LIST

### Patent Literature

PTL 1: Japanese Patent Application Laid-open No. 2011-204574

### SUMMARY OF THE INVENTION

However, when the exhaust duct described in PTL 1 collapses due to an external impact on power storage modules, the exhaust valves of the power storage devices may be obstructed, for example, by an upper cover of the exhaust duct. The power storage devices obstructed by the upper cover or the like cannot perform sufficient gas release and can make it difficult for their internal pressure to increase.

A power storage module according to the present disclosure includes a holder that includes a plurality of housing parts housing a plurality of power storage devices, each with an exhaust valve, and a plurality of through holes connecting the plurality of housing parts and an outside; and a duct cover covering an end face of the holder where the exhaust valves of the plurality of power storage devices are exposed through the plurality of through holes and forming a gas flow passage with the end face. The duct cover includes a plurality of protrusions discretely protruding toward the end face. The plurality of protrusions include respective leading ends facing a remaining part of the end face where the plurality of through holes are absent.

The power storage module according to the present disclosure has improved reliability.

### BRIEF DESCRIPTION OF THE DRAWINGS

FIG. 1 is an external perspective view schematically illustrating a configuration of battery module 10.
FIG. 2 is a perspective view illustrating battery module 10, with duct cover 20 removed.
FIG. 3 is a diagram illustrating protrusions 22 of duct cover 20 that are engaged in recesses of peripheral wall 16.

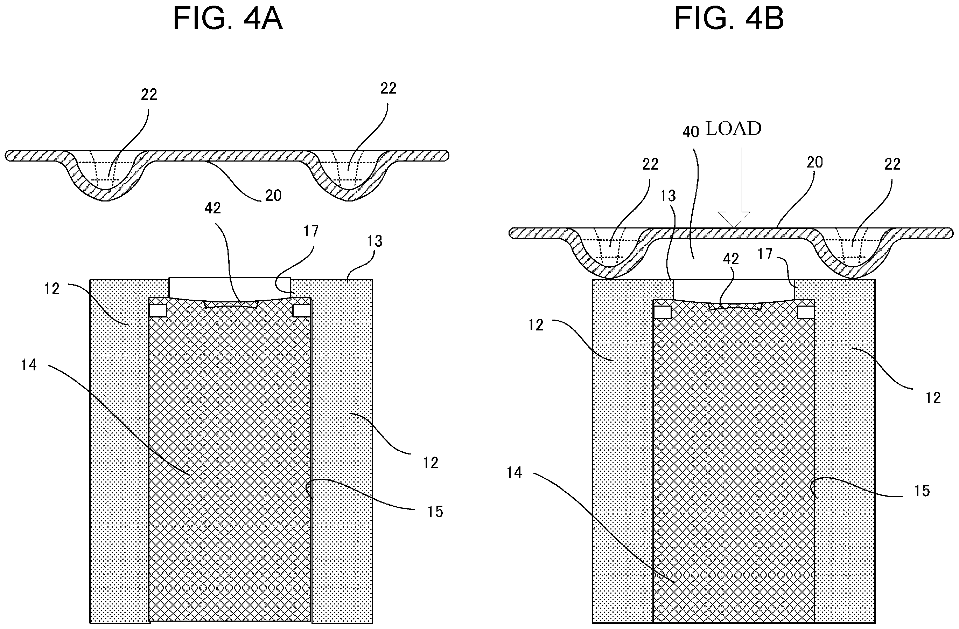

FIG. 4A is a diagram for showing how battery module 10 experiences a load applied from above, illustrating a state before the load application.
FIG. 4B is a diagram for showing how battery module 10 experiences the load applied from above, illustrating a state after the load application.
FIG. 5A is a diagram illustrating an exemplary sectional shape of protrusion 22, in which case the shape is triangular.
FIG. 5B is a diagram illustrating an exemplary sectional shape of protrusion 22, in which case the shape is quadrangular.
FIG. 5C is a diagram illustrating an exemplary sectional shape of protrusion 22, in which case the shape is semicircular.
FIG. 6 is a diagram illustrating an exemplary arrangement of protrusions 22 of duct cover 20.
FIG. 7 is a diagram illustrating another exemplary arrangement of protrusions 22 of duct cover 20.

### DESCRIPTION OF EMBODIMENT

With reference to the drawings, a detailed description is hereinafter provided of an exemplary embodiment of a battery module that uses cylindrical cells, and which is given as an example of a power storage module according to the present disclosure. It is to be noted that the present disclosure encompasses configurations obtained by selectively combining the exemplary embodiment and plural modifications that are to be described below. Furthermore, power storage devices to be used in the power storage module according to the present disclosure are not limited to cylindrical cells and may be capacitors.

### Overall Configuration

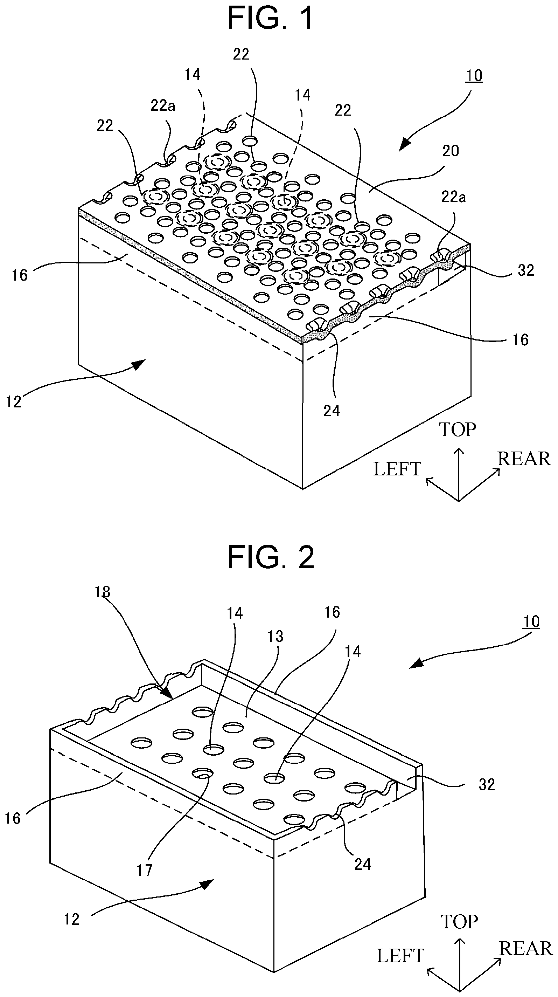

FIG. 1 is an external perspective view schematically illustrating a configuration of battery module 10, while in FIG. 2, duct cover 20 is removed.

Holder 12 is generally a rectangular parallelepiped, housing plural cells 14. Holder 12 includes plural vertically and cylindrically bored housing parts 15 where cells 14 are housed, respectively. Holder 12 includes plural through holes 17 formed in end face 13. These through holes 17 allow communication between an outside of holder 12 and corresponding housing parts 15 and are where cells 14 are exposed. In this example, each cell 14 is cylindrical but is not limited to the cylindrical shape. Each cell 14 may be, for example, prismatic. For example, each cell 14 may include an electrode body including a positive electrode and a negative electrode; an outer covering can housing the electrode body and an electrolyte; and a sealing plate closing an opening of the outer covering can via a gasket. The sealing plate is electrically connected to one of the positive and negative electrodes via a lead, and the outer covering can is electrically connected to the other of the positive and negative electrodes. The plural cells may be arranged, for example, in a staggered configuration where the cells are arranged in plural rows in a front-to-rear direction and are out of alignment in columns adjacent in a left-to-right direction.

Holder 12 includes upward projecting peripheral wall 16 along a peripheral edge (periphery) of end face 13, and this disposed peripheral wall 16 surrounds internal space 18. Disposed on an upper side of peripheral wall 16 is duct cover 20 serving as a lid for internal space 18 to be maintained above end face 13 (the upper face) of holder 12. Internal space 18 functions as a flow passage (described later) for exhaust gas from cells 14.

Plural cells 14 are electrically connected in parallel and series as appropriate. Therefore, although not illustrated, bus bars or the likes are provided in internal space 18, connecting cells 14. Holder 12 can be made of synthetic resin, and duct cover 20 can be made of metal, such as aluminum or aluminum alloy, or synthetic resin treated to withstand gas temperature and possess more strength than the material for holder 12.

Duct cover 20 herein includes plural discretely arranged protrusions 22 bulging downward (toward end face 13). In the example of FIG. 1, duct cover 20 has plural protrusions 22 throughout, including at ends in the left-to-right direction. Peripheral wall 16, which extends upward from the periphery of holder 12, includes on a left and a right side recesses 24 corresponding in shape to terminal protrusions 22a of duct cover 20, allowing terminal protrusions 22a to engage in and be housed. While each of terminal protrusions 22a is shaped by cutting away roughly half of protrusion 22 in this example, each terminal protrusion 22a does not necessarily have to be half and may be larger or smaller in size than protrusion 22. However, terminal protrusions 22a and protrusions 22 are preferably formed using the same process. Any number of terminal protrusions 22a can be provided anywhere and may correspond to rows of protrusions 22. Various forming processes can be used to form such protrusions 22 and terminal protrusions 22a.

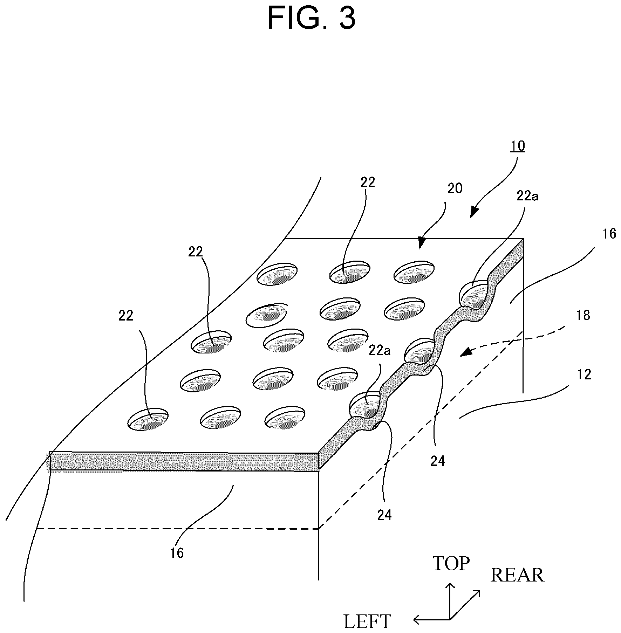

FIG. 3 is a diagram illustrating duct cover 20 being supported by peripheral wall 16, with protrusions 22 of duct cover 20 engaged in recesses 24 of peripheral wall 16. This engagement of protrusions 22 of duct cover 20 in recesses 24 allows for positioning of duct cover 20 in the front-to-rear direction with respect to peripheral wall 16.

In FIGS. 1 and 3, side faces of duct cover 20 are gray-colored for convenience's sake.

In this configuration, internal space 18 is maintained above cells 14. Peripheral wall 16 partly includes exhaust port 32. Using this exhaust port 32 as an exhaust outlet, internal space 18 functions as the exhaust gas flow passage. Peripheral wall 16 may have exhaust port 32 anywhere (in any one of four sides if peripheral wall 16 is quadrangular). Peripheral wall 16 may have plural exhaust ports 32, instead of one exhaust port 32. Exhaust port 32 should be appropriately located, depending on where battery module 10 is disposed. Vertical Impact

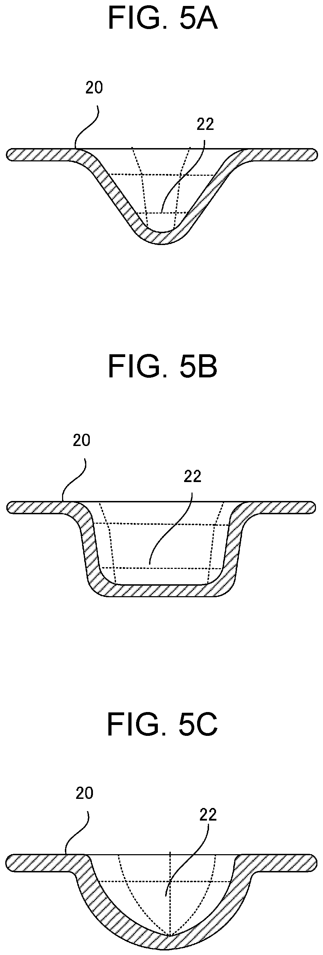

FIGS. 5A and 5B illustrate how duct cover 20 is pressed against the face of holder 12 due to a load applied to battery module 10 from above. Under normal conditions, duct cover 20 is supported by peripheral wall 16 and thus is positioned above holder 12, keeping internal space 18, as illustrated in FIG. 5A.

When a front-to-rear impact (the load from above) acts, metal duct cover 20, which is stronger than resin-made peripheral wall 16, destroys peripheral wall 16 and is pressed against the upper face of holder 12, as illustrated in FIG. 5B.

In the example given here, protrusions 22 of duct cover 20 are vertically out of alignment with cells 14, being positioned to correspond to the upper face (end face 13) of holder 12. Therefore, when duct cover 20 is pressed against holder 12, protrusions 22 are pressed against an area of end face 13 among through holes 18 at their respective lower ends (leading ends). As a result, exhaust space 40 is formed among protrusions 22, being secured above cells 14.

Around each cell 14, duct cover 20 should have plural protrusions 22, preferably three or more.

Exhaust valve 42 is disposed at an upper end of each cell 14. This exhaust valve 42 is a valve that releases the internal gas when internal pressure of cell 14 increases. For exhaust valve 42, various configurations that are conventionally known can be adopted. For example, exhaust valve 42 may be such that a sealing plate partly includes a weak part that breaks when the internal pressure of cell 14 exceeds a predetermined value. Another alternative is that exhaust valve 42 may be of a self-reset type that reseals the cell after releasing the gas. Each cell 14 may include an exhaust section at a bottom of the outer covering can. The gas released from exhaust valve 42 is emitted out of battery module 10 through exhaust space 40 and exhaust port 32.

Even when protrusions 22 are in contact with the upper face of holder 12, discretely arranged protrusions 22 ensure that exhaust space 40 surrounds protrusions 22, enabling the exhaust gas to be emitted from exhaust port 32. The vacant space between adjacent protrusions 22 communicates with exhaust port 32 (the exhaust outlet) on end face 13 in a direction parallel to end face 13. The phrase "communicates with exhaust port 32 (the exhaust outlet) on end face 13" herein means communication with exhaust port 32 without using the original exhaust passage between the leading ends of protrusions 22 and end face 13. There may be protrusion(s) 22 disposed to face the exhaust port in a protruding direction of protrusion(s) 22. By facing exhaust port 32, protrusion(s) 22 can come into contact with an exhaust port-side area of end face 13. The configuration using this (these) protrusion(s) 22 enables prevention of blockage of exhaust port 32 when duct cover 20 is pressed against end face 13. Exhaust port 32 to be formed in peripheral wall 16 may be a cutout extending downward from an upper edge of peripheral wall 16. This configuration facilitates the emission of air between adjacent protrusions 22 through exhaust port 32 in a state before duct cover 20 is pressed against end face 13 of holder 12, compared to when exhaust part 32 is defined within an annular frame.

Holder 12 in the drawings is solid and resin-made and has vertically bored housing parts 15 for cells 14; however, various configurations can be adopted for holder 12 as long as cells 14 can be held.

While duct cover 20 has been described as being above holder 12, its position may be vertically reversed, in which case duct cover 20 is under holder 12, and exhaust space 40 is also formed at a lower side of holder 12.

### Shape of Protrusion 22

FIGS. 5A, 5B, and 5C provide exemplary sectional shapes of protrusion 22, illustrating a substantially triangular section, a quadrangular section, and a substantially semicircular section, respectively.

Each of these concave shapes allows for securement of an exhaust gas flow passage when its bottom is pressed against the face of holder 12. A face of duct cover 20 that is opposite a face with the protrusions is sunken where the protrusions are formed. However, the protrusions may be solid protrusions where the face is not sunken.

### Arrangement of Protrusions 22

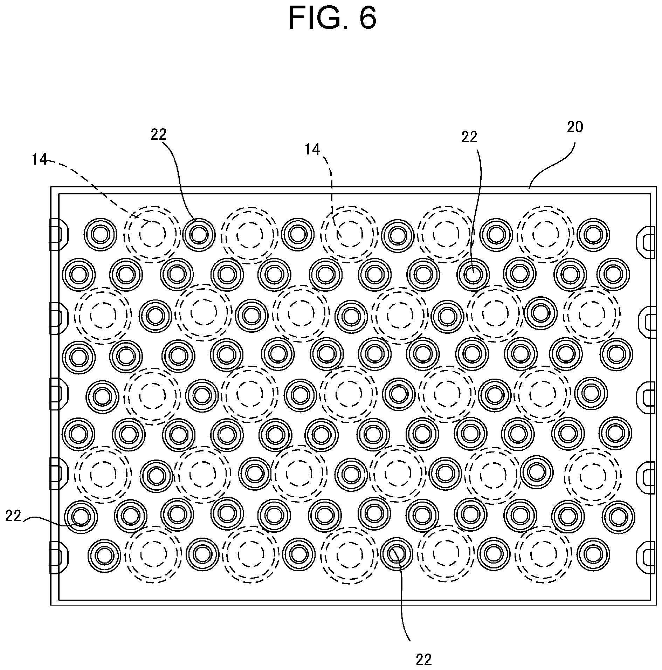

FIG. 6 is a plan view of duct cover 20, illustrating an example where essentially six protrusions 22 are arranged around one through hole 18 in end face 13. While respective end sides of a front-end and a rear-end row of cells 14 have no arrangement of protrusions 22 in this example, protrusions 22 may also be arranged on these end sides.

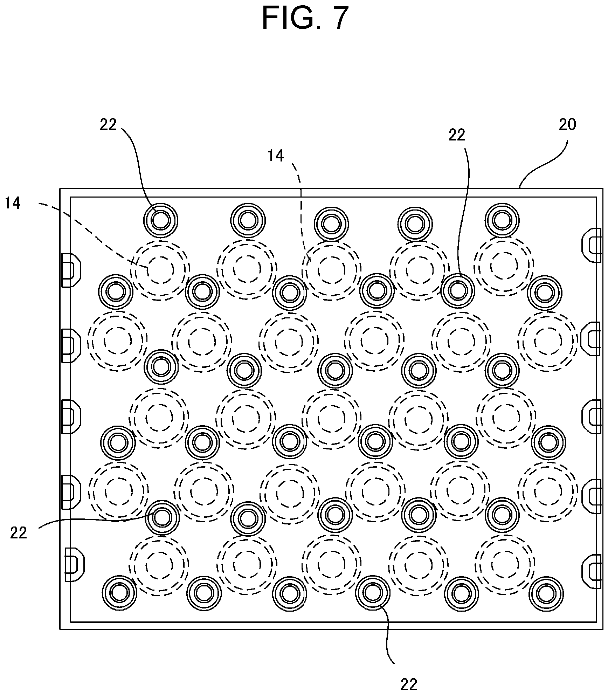

FIG. 7 is a plan view of duct cover 20, illustrating an example where essentially three protrusions 22 are arranged above and around one cell 14. In this example as well, protrusions 22 may also be arranged on respective end sides of a front-end and a rear-end row of cells 14.

Even when duct cover 20 having such a configuration as illustrated in each of FIGS. 6 and 7 is pressed against holder 12, duct cover 20 can secure an exhaust gas flow passage around protrusions 22 because protrusions 22 abut the face of holder 12.

### REFERENCE MARKS IN THE DRAWINGS

10: battery module (power storage module)
12: holder
13: end face
14: cell (power storage device)
15: housing part
16: peripheral wall
17: through hole
18: internal space
20: duct cover
22: protrusion
22a: terminal protrusion
24: recess
32: exhaust port
40: exhaust space
42: exhaust valve

## Claims

1. A power storage module comprising:
a holder including
a plurality of housing parts housing a plurality of power storage devices that each include an exhaust valve and
a plurality of through holes connecting the plurality of housing parts and an outside; and
a duct cover covering an end face of the holder where exhaust valves of the plurality of power storage devices are exposed through the plurality of through holes and defining a gas flow passage with the end face, wherein
the duct cover includes a plurality of protrusions discretely protruding toward the end face, and
the plurality of protrusions include respective leading ends facing a remaining part of the end face where the plurality of through holes are absent.

2. The power storage module according to claim 1, wherein
the holder includes along a periphery of the holder a peripheral wall projecting from the end face, and
the peripheral wall includes at least one recess allowing the plurality of protrusions to engage in and be housed.

3. The power storage module according to claim 1 or 2, wherein the plurality of protrusions arrange the plurality of through holes in the holder around the plurality of protrusions.

4. The power storage module according to any one of claims 1 to 4, further comprising an exhaust outlet, wherein
a vacant space among the plurality of protrusions communicates with the exhaust outlet on the end face in a direction parallel to the end face.

5. The power storage module according to any one of claims 1 to 4, further comprising an exhaust outlet, wherein
at least one of the plurality of protrusions faces the exhaust outlet in a protruding direction of the at least one of the plurality of protrusions.

6. The power storage module according to claim 5, wherein
the holder includes along a periphery of the holder a peripheral wall projecting from the end face, and
the exhaust outlet is formed by cutting out in a peripheral wall.
